# FASCICULE DE BREVET EUROPEEN

(11) **EP 3 152 074 B1**
(45) Date de publication et mention de la délivrance du brevet: **14.09.2022**
(21) Numéro de dépôt: 15725020.0
(22) Date de dépôt: 28.05.2015
(51) Int. Cl.: B60J 3/04, G02F 1/1334, B32B 17/10

(54) **VITRAGE COMPRENANT UN FILM À CRISTAUX LIQUIDES**
VERGLASUNG, DIE EINEN FLÜSSIGKRISTALLFILM UMFASST
GLAZING INCLUDING A LIQUID-CRYSTAL FILM

(30) Priorité: 04.06.2014 EP 14171131
(43) Date de publication de la demande: 12.04.2017
(73) Titulaire: AGC Glass Europe, 1348 Louvain-la-Neuve (BE)
(72) Inventeur: VIVIER, Jonathan, B-5030 Beuzet (BE)
(74) Mandataire: AGC Glass Europe
(86) Numéro de dépôt international: PCT/EP2015/061787
(87) Numéro de publication internationale: WO 2015/185428

(56) Documents cités:
- FR-A1- 2 997 517
- JP-A- H06 186 529
- JP-A- 2004 093 873
- JP-A- 2004 093 873
- JP-A- 2013 072 895
- JP-A- 2013 072 895
- US-A- 5 285 299
- US-A- 5 724 238
- US-A- 5 835 174

## Description

L'invention concerne les vitrages automobiles comportant un film à cristaux liquides et plus particulièrement les films polymères dans lesquels les cristaux liquides sont dispersés (polymer dispersed liquid cristals PDLC). L'utilisation de ces films est destinée à modifier les caractéristiques optiques d'un vitrage au moyen d'une commande électrique. De manière plus précise cette utilisation a pour but de passer d'un état dans lequel le vitrage présente une diffusion pratiquement complète de la lumière incidente, à un état ou cette diffusion est aussi réduite que possible. Ce changement d'état est commandé respectivement par l'absence d'un champ électrique dans le premier cas et à l'application du champ électrique dans le second cas.

Des publications font état notamment de la mise en œuvre de ces vitrages notamment pour constituer des toits automobiles. C'est le cas par exemple de la demande WO2014/135467 déposée le 28.2.2014. Dans l'application visée dans cette demande diverses contraintes s'imposent dont certaines sont spécifiques au domaine automobile. Parmi ces contraintes figurent les conditions relatives à la commande électrique de ces films.

Le document JP2004093873 décrit un système à cristaux liquides comprend: un élément de gradation (« dimmer ») à cristaux liquides comprenant une paire d'électrodes transparentes qui se font face et respectivement disposées sur une paire de substrats isolants, et une couche de cristaux liquides dispersés dans un polymère, qui est prise en sandwich entre les paire de substrats isolants et formée par dispersion de cristaux liquides dans une matrice polymère. Le signal pouvant être trapézoïdal.

Le document JP2013072895 décrit un vitrage automobile permettant le control de la lumière par une couche de cristaux liquides pris en sandwich dans ce vitrage automobile.

Le document FR 2 997 517 concerne le domaine des vitrages électrocommandables à propriétés optiques variables et plus particulièrement un système à diffusion lumineuse variable comprenant une couche PDLC située entre deux électrodes portées par des supports.

Dans les applications plus traditionnelles concernant par exemple la formation de cloisons faisant office de rideaux dans le bâtiment, les moyens utilisés pour ces commandes électriques peuvent être adaptés sans trop de difficulté. Il s'agit par exemple du choix de la tension nécessaire, ou de la puissance consommée. Le raccordement au secteur offre une certaine latitude même si des dispositifs sont nécessaires pour sélectionner les meilleures conditions.

La mise en œuvre dans le domaine des vitrages automobile requiert des alimentations qui ne sont pas ordinairement présentes. Il est nécessaire notamment d'alimenter les électrodes du film à une tension de plusieurs dizaines de volts. A la base les véhicules automobiles, lorsqu'il ne s'agit pas de gros utilitaires, disposent d'une alimentation continue de l'ordre de 12 à 14 volts. Il convient donc de convertir cette alimentation pour l'amener aux conditions requises pour la mise en œuvre des films à cristaux liquides. De même l'alimentation est nécessairement en courant alternatif, là aussi avec des fréquences variables. La présence de courant alternatif est requise pour ne pas altérer les propriétés des films au cours de leur utilisation par une modification de la dispersion nécessaire de ces cristaux dans le polymère. La mise en œuvre de ces films requiert donc nécessairement l'utilisation de convertisseurs DC/AC.

Au-delà de ces conditions de base, le fait pour le véhicule de devoir fonctionner de manière autonome, et la multiplication des éléments fonctionnels nécessitant une alimentation électrique, exige de ces produits qu'ils ne consomment qu'un minimum d'énergie même si celle-ci, considérée isolément, reste relativement modeste. L'alimentation doit aussi être de dimensions aussi petites que possible et être maintenue par un refroidissement adéquat à une température peu élevée. Tout ceci conduit donc à rechercher un fonctionnement avec une puissance aussi limitée que possible.

Les conditions d'alimentation des films à cristaux liquides sont d'abord commandées par la nature des produits mis en œuvre. Le choix de ces derniers est fonction des propriétés optiques requises. En conséquence les possibilités de faire varier ces conditions sont limitées. Les meilleures performances pour l'usage automobile résident dans l'importance de variation de la diffusion entre les deux états extrêmes, et surtout dans la valeur de la diffusion à l'état activé. Celle-ci pour satisfaire aux demandes des constructeurs devrait être pratiquement inexistante. En pratique dans les applications aux cloisons en bâtiment on constate une diffusion résiduelle qui ses situe à environ 8-10%. Pour les applications automobiles cette diffusion doit de préférence être inférieure à 5%, et avantageusement inférieure à 3%.

Comme indiqué dans la demande antérieure précitée, la diffusion résiduelle est en partie fonction de la tension appliquée. Mais celle-ci ne peut être accrue sans limite. Au-delà d'un certain seuil, le risque de « claquage » du film devient significatif. Pour éviter cet inconvénient la tension appliquée est nécessairement limitée. Pour les films d'épaisseur satisfaisante, c'est-à-dire ceux qui permettent une diffusion résiduelle aussi faible que possible d'une part, et d'autre part une diffusion très importante à l'état non activé pour constituer un véritable effet «rideau» assurant l'aspect privatif recherché, la tension appliquée ne dépasse pas normalement 220 V, et s'établit le plus souvent aux environs de 70Vrms.

Le choix de la fréquence est commandé par les temps de réponse du film. Celle-ci est telle que l'observateur ne perçoive pas l'alternance liée à cette fréquence. La persistance rétinienne conduit à utiliser une fréquence qui n'est pas inférieure à 20 Hz et avantageusement pas inférieure à 25Hz. Dans les applications les plus usuelles le choix se porte sur une fréquence bien supérieure de l'ordre de 100Hz ou plus.

Dans les applications traditionnelles par ailleurs, les convertisseurs utilisés généraient une variation de tension sensiblement sinusoïdale.

Il est aussi bien connu que les films PDLC sont sensibles à la température. Lorsqu'elle s'élève, l'effet du champ électrique tend à s'atténuer. Les cristaux s'orientent moins facilement car ils deviennent plus mobiles. Pour maintenir le même effet, la puissance délivrée au film doit être accrue. Au-delà d'une certaine limite il n'est plus possible de compenser la perte de réponse du film par un accroissement de puissance. Pour la majorité des films PDLC la température à partir de laquelle la diffusion est radicalement réduite lorsque le film est soumis au champ électrique, se situe aux environs de 60 à 80°C. Si la température est abaissée le film retrouve ses propriétés initiales. A des températures plus élevées, de l'ordre 110-120°C, l'altération du film peut devenir irréversible. Les constructeurs veulent conserver la transition adéquate jusqu'à une température d'au moins 50°C et de préférence d'au moins 60°C pour tenir compte de l'échauffement naturel auquel les vitrages automobile sont exposés.

Les différentes contraintes exposées ci-dessus laissent une marge limitée d'amélioration des conditions de mise en œuvre. Les inventeurs ont néanmoins cherché à optimiser les performances et notamment la consommation énergétique de l'utilisation des films PDLC dans les vitrages automobiles. La solution proposée est telle que précisé dans la revendication 1. Ils ont ainsi montré que le choix d'une tension qui ne suit pas une sinusoïde permettait d'obtenir un effet optique similaire avec une puissance moins élevée.

La constitution d'une tension non sinusoïdale, notamment trapézoïdale ou carrée, suivant une fréquence de base donnée F peut s'analyser en un ensemble comprenant les fréquences harmoniques supérieures 2F, 3F .... Un choix de fréquence de base approprié permet aussi d'éviter les possibles interférences avec sources lumineuses de type néon dont la fréquence la plus usuelle est de 50Hz.

Selon l'invention, la tension varie selon un mode trapézoïdal. Suivant un mode «carré» conduit à une variation instantanée de l'intensité qui conduit à un pic extrêmement accentué au début de chaque période. Une variation de potentiel plus progressive permet de minimiser le pic d'intensité comme indiqué dans les exemples suivants.

Pour les fréquences choisies selon l'invention, le temps de montée en tension est compris entre 0,5 et 2 millisecondes.

La diminution de puissance nécessaire joue dans le fonctionnement du film PDLC, mais aussi dans les convertisseurs qui dissipent en chaleur environ le quart de la puissance totale. Cette diminution conduit donc à un gain sensible.

Le choix d'une tension rms limitée conduit aussi à une tension maximale moindre. Selon l'invention la tension de préférence n'est pas supérieure à 55Vrms et de façon particulièrement préférée pas 50Vrms. En limitant la tension, les contraintes de sécurité fixées dans les normes automobile sont par ailleurs plus facilement respectées.

Les inventeurs ont aussi montré que la limitation de la fréquence est un facteur qui permet de réduire la consommation énergétique. Néanmoins pour maintenir une perception continue, la fréquence n'est pas inférieure à 20Hz et de préférence pas inférieure à 25Hz.

Selon l'invention la fréquence est avantageusement au plus égale à 50Hz, mais pour la raison des possibles interférences indiquée précédemment, il est préférable de ne pas choisir précisément la valeur de 50Hz.

Dans les conditions indiquées la puissance dissipée dans le film à l'état activé, avec une diffusion résiduelle qui n'est pas supérieure à 5% et avantageusement pas supérieure à 3%, peut être limitée à une valeur n'excédant pas 10w par mètre carré de film, et qui peut être avantageusement inférieure à 5w par mètre carré.

Si les conditions sont bien définies comme indiqué ci-dessus, et le choix du film approprié, la mise en œuvre d'un film PDLC selon l'invention permet de maintenir la diffusion a l'état activé à des valeurs très réduites y compris lorsque la température est supérieure à la température ambiante sans excéder 50 ou même 60°C.

L'invention est décrite dans la suite en faisant référence aux figures dans lesquelles :
- la figure 1 représente en vue éclatée schématique un vitrage comprenant un film PDLC ;
- la figure 2 représente le vitrage de la figure 1 assemblé, en coupe schématique ;
- la figure 3 est un graphique illustrant les variations de la proportion de lumière diffuse («haze») à la transmission totale, directe et diffuse, telle que définie dans la norme ASTM 1003, en fonction de la température à l'état non activé ;
- la figure 4 est analogue à la figure 3 le film étant activé ;
- la figure 5 présente pour trois échantillons distincts, l'évolution de la transmission directe TL à l'état non activé en fonction de la température ;
- la figure 6 illustre un mode de signal de tension traditionnel et un mode selon l'invention ;
- la figure 7 montre par comparaison la diffusion résiduelle en mode activé dans les conditions traditionnelles et selon l'invention ;
- la figure 8 comme à la figure 7 montre par comparaison la transmission totale pour le mode activé ;
- la figure 9 montre l'incidence de différentes tensions efficaces sur la diffusion résiduelle pour des signaux trapézoïdaux.

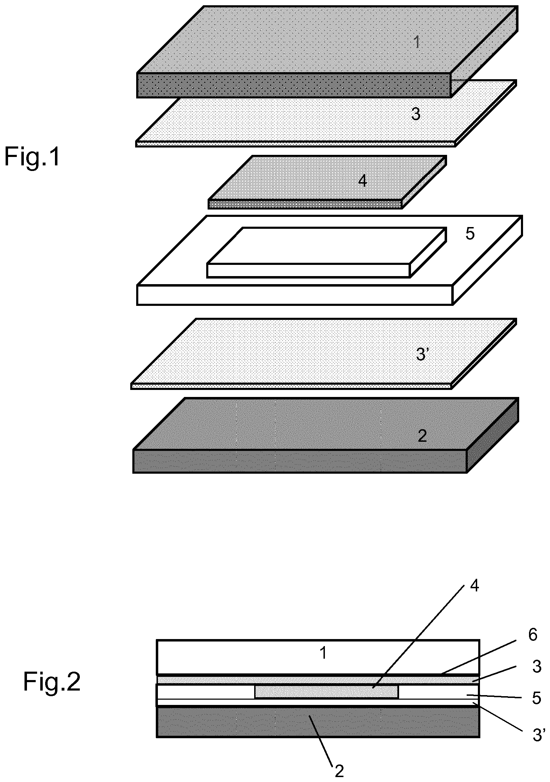

Le vitrage représenté aux figures 1 et 2, est destiné à entrer dans la composition d'un toit automobile. Le choix de cette destination conduit à réduire sensiblement la transmission lumineuse en toutes circonstances, que le film PDLC soit ou non activé. Pour cette raison l'ensemble constitué par les feuilles de verre et les intercalaires réduisent la transmission de façon très importante.

Dans l'exemple choisi le vitrage comprend deux feuilles de verre 1 et 2. La feuille 1 est en verre clair pour minimiser son absorption des infrarouges solaires. Elle est revêtue sur sa face tournée vers les intercalaires d'un ensemble de couches réfléchissant sélectivement les infrarouges, noté 6 sur la figure 2. Dans l'exemple choisi, il s'agit d'un ensemble comprenant trois couches d'argent avec des couches diélectriques séparant ces couches métalliques. Le système de couches est du type décrit dans la publication WO 2005/00348.

La proportion d'énergie incidente qui franchit le système de couches est ainsi limité de moitié environ. Par la combinaison de la feuille de verre clair et des couches réfléchissantes on limite l'échauffement du vitrage, et donc du film PDLC, lorsqu'il est exposé au rayonnement solaire.

Sous la feuille de verre 1 revêtue des couches réfléchissantes, une première feuille 3 intercalaire, de PVB gris, est en contact avec le film PDLC 4. Le film lui-même est inséré dans une cadre 5 constitué d'une feuille de PVB dans laquelle est ménagé le logement recevant le film 4. Une autre feuille de PVB 3' est au contact de la seconde face du film 4.

Les feuilles intercalaires et le film 4 ont chacun une épaisseur de 0,38mm.

La deuxième feuille de verre est en verre gris fortement absorbant. Chaque feuille de verre présente une épaisseur de 2,1mm.

L'ensemble des feuilles de verre et des intercalaires (en l'absence de film PDLC) présente une transmission lumineuse de 7-8%. La présence du film PDLC permet de modifier cette transmission lumineuse sous forme diffusée ou transmise comme indiqué dans la suite.

Pour les essais rapportés le film PDLC provient de la société «Innoptec». Ce film comme la majorité des films de ce type provenant d'autres fournisseurs, est constitué d'une matrice polymère contenant des cristaux liquides. Cette matrice est revêtue sur chacune de ses faces d'électrodes constituées de feuilles de PET (polyéthylène téréphtalate) revêtues d'une couche d'oxyde conducteur (ITO).

Les constructeurs exigent d'abord des vitrages comportant un film PDLC qu'ils répondent à leur demande de propriétés optiques. Pour cela, à l'état non activé le vitrage doit diffuser pratiquement la totalité de la lumière visible qui traverse le vitrage. La diffusion est celle mesurée selon la norme ASTMD 1003. Elle est faite avec sphère d'intégration et comprend la lumière effectivement diffusée comme celle pratiquement non déviée (moins de 2° par rapport à l'incidence) désignée comme lumière transmise.

Dans les essais rapportés l'illuminant choisi est l'illuminant C.

Le film d'essai est d'abord soumis à un courant alternatif sinusoïdal avec une tension maximale de 70Vrms (soit un maximum de 100V) et de fréquence 50Hz.

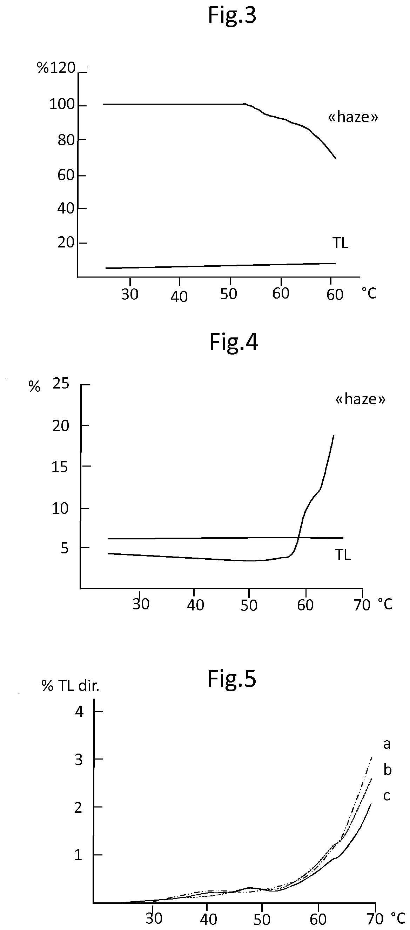

Un premier essai rapporté à la figure 3, montre l'évolution du rapport de la diffusion à la transmission totale qualifié de «haze», et la valeur de la transmission totale pour le vitrage en fonction de la température du vitrage. On constate à la température ambiante une diffusion pratiquement complète à l'état non activé. La part de lumière totale transmise est inférieure à 10%. Dans ces conditions le vitrage est translucide et joue son rôle de rideau masquant les objets situés de l'autre côté du vitrage par rapport à l'observateur.

Ces caractéristiques restent peu modifiées lorsque la température du vitrage s'élève jusqu'à environ 50°C. Au-delà le caractère diffusant s'atténue rapidement.

Le même vitrage est testé dans les conditions activées. Le résultat est reporté à la figure 4. La diffusion cette fois est très réduite. Le rapport précédent reste inférieur à 4% pour les températures inférieures à 55°C. Il croit ensuite en raison d'une perte d'efficacité du champ électrique sur les particules de cristaux liquides.

La transmission totale dans les 2° d'angle reste peu changée de l'ordre de 6%.

La figure 5 illustre le rapport de la TL directe à la totalité de la lumière transmise (TL directe+ lumière diffusée) en mode non-activé pour trois échantillons distincts (a, b, c). Ce rapport montre l'efficacité du film comme élément créant un mode «privatif».

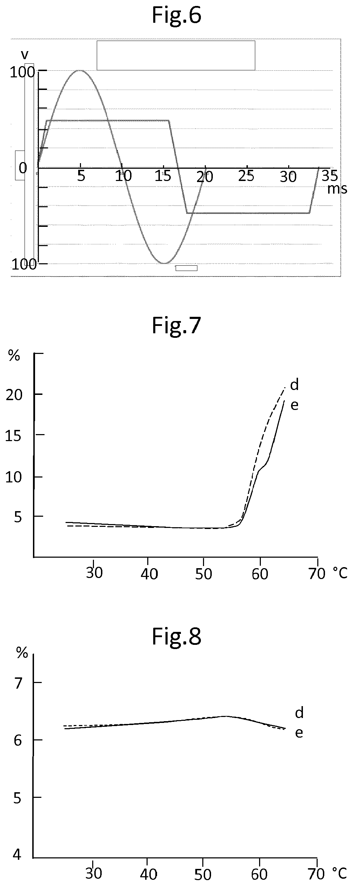

Pour améliorer les caractéristiques de l'alimentation du film PDLC, la tension utilisée est telle que représentée à la figure 6. Cette figure comporte le type «traditionnel» avec une alimentation dont la tension (70Vrms) varie de manière sinusoïdale à la fréquence de 50Hz. Sur la figure 6 est aussi représentée une alimentation selon l'invention. Pour celle-ci la fréquence est ramenée à 30Hz, et le signal en tension est de forme trapézoïdale avec une tension efficace de 48Vrms. Le temps de montée en tension est de 1ms et conduit à une intensité qui ne dépasse pas 200mA. A noter que la même fréquence et la même tension, mais avec un signal carré conduisent à un pic d'intensité initial de l'ordre de 2A.

Dans la configuration selon l'invention on vérifie en premier que les propriétés optiques du vitrage ne sont pas altérées. Dans le mode non activé il va de soi que rien n'est changé. Pour le mode activé les figures 7 et 8 montrent une concordance presque parfaite dans la diffusion résiduelle (figure 7) entre la courbe correspondant au vitrage selon l'invention (d) et celle du vitrage de comparaison (e) et dans la transmission totale (figure 8). Le mode d'alimentation retenu selon l'invention conserve donc parfaitement les propriétés du film PDLC utilisé dans les conditions antérieures.

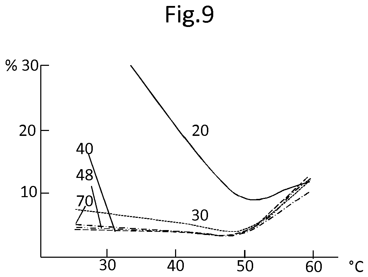

La figure 9 montre l'évolution de la diffusion résiduelle en fonction de la température pour une fréquence de 30Hz à différentes valeurs de la tension efficace en tension trapézoïdale. On constate qu'un minimum de tension est nécessaire pour obtenir un ordre de grandeur de la diffusion résiduelle acceptable. A 20Vrms la diffusion est excessive. Elle décroit rapidement quand la tension efficace atteint 30V et se stabilise pratiquement pour les valeurs de 40, 48 Vrms, montrant qu'un accroissement supplémentaire serait sans utilité. A titre indicatif le mode antérieur est aussi reporté sur la figure (valeur 70Vrms).

Une comparaison en termes de puissance nécessaire pour différentes conditions est établie. Le tableau suivant rapporte les résultats enregistrés. Dans ce tableau figurent les formes et les fréquences appliquées, la tension efficace et la puissance consommée par mètre carré de film PDLC. Les mesures sont faites à la température de 60°C.

| Forme | Tension Vrms | Fréquence Hz | Puissance w/m2 |
|---|---|---|---|
| Sinusoïdale | 70 | 50 | 17 |
| Trapèze | 48 | 30 | 6,8 |
| Trapèze | 40 | 30 | 5,7 |
| Trapèze | 30 | 30 | 4,2 |
| Trapèze | 25 | 30 | 3,5 |

La première ligne correspond à la référence servant de base de comparaison. On constate que quelle que soit l'essai, selon les conditions de l'invention la puissance consommée est sensiblement moindre que pour l'exemple comparatif. On constate aussi que pour une même fréquence (30Hz) avec la même forme de signal, la puissance consommée décroît significativement avec la tension efficace appliquée, pour autant que celle-ci permette de maintenir une faible diffusion résiduelle comme indiqué à propos de la figure 9.

## Revendications

1. Vitrage automobile feuilleté comprenant un film PDLC alimenté électriquement en courant alternatif de fréquence inférieure à 50Hz, la tension variant de manière non sinusoïdale, le maximum de la tension «efficace» ne dépassant pas 80Vrms et de préférence pas 50Vrms **caractérisé en ce que** la tension varie selon une forme trapézoïdale avec un temps de monté de 0,5 à 2ms.

2. Vitrage selon la revendication 1 dans lequel la tension ne dépasse pas 55Vrms et de préférence pas 50Vrms.

3. Vitrage selon la revendication 2 dans lequel la fréquence n'est pas inférieure à 20Hz et de préférence pas inférieure à 25Hz.

## Patentansprüche

1. Kraftfahrzeugverbundverglasung, die eine PDLC-Folie umfasst, die elektrisch mit Wechselstrom mit einer Frequenz von weniger als 50 Hz versorgt wird, wobei die Spannung auf nicht sinusförmige Weise variiert, wobei das Maximum der "effektiven" Spannung 80 Vrms und bevorzugt 50 Vrms nicht übersteigt, **dadurch gekennzeichnet, dass** die Spannung gemäß einer Trapezform mit einer Anstiegszeit von 0,5 bis 2 ms variiert.

2. Verglasung nach Anspruch 1, bei der die Spannung 55 Vrms und bevorzugt 50 Vrms nicht übersteigt.

3. Verglasung nach Anspruch 2, bei der die Frequenz nicht weniger als 20 Hz und bevorzugt nicht weniger als 25 Hz beträgt.

## Claims

1. Laminated automotive glazing comprising a PDLC film powered electrically by an AC current of frequency lower than 50 Hz, the voltage varying non-sinusoidally, the maximum of the "effective" voltage not exceeding 80 Vrms and preferably not 50 Vrms, **characterized in that** the voltage variation has a trapezoidal shape with a rise time of 0.5 to 2 ms

2. Glazing according to Claim 1, wherein the voltage does not exceed 55 Vrms and preferably not 50 Vrms.

3. Glazing according to Claim 2, wherein the frequency is no lower than 20 Hz and preferably no lower than 25 Hz.
